# EUROPEAN PATENT SPECIFICATION

(11) **EP 0 971 863 B1**
(45) Date of publication and mention of the grant of the patent: **06.11.2002**
(21) Application number: 98915188.1
(22) Date of filing: 03.04.1998
(51) Int. Cl.: C04B 35/536, F16J 15/34

(54) **OXIDATION AND CORROSION RESISTANT FLEXIBLE GRAPHITE COMPOSITE SHEET AND METHOD**
OXIDATIONS- UND KORROSIONSBESTÄNDIGER, FLEXIBLER GRAPHITKOMPOSITFILM UND VERFAHREN
FEUILLE SOUPLE COMPOSITE A BASE DE GRAPHITE RESISTANT A L'OXYDATION ET A LA CORROSION ET SON PROCEDE DE FABRICATION

(30) Priority: 04.04.1997 US 833356
(43) Date of publication of application: 19.01.2000
(73) Proprietor: UCAR CARBON TECHNOLOGY CORPORATION, Wilmington, Delaware 19803 (US)
(72) Inventor: MERCURI, Robert, Angelo, Seven Hills, OH 44131 (US); BLAIN, David, Paul, Rocky River, OH 44016 (US); McGLAMERY, Joe, Tom, Brunswick Hills, OH 44212 (US)
(74) Representative: W.P. Thompson & Co.
(86) International application number: US9806279
(87) International publication number: WO98045223

(56) References cited:
- EP-A- 0 527 046
- GB-A- 1 504 841
- US-A- 3 719 608
- PATENT ABSTRACTS OF JAPAN vol. 014, no. 115 (C-0696), 5 March 1990 & JP 01 317168 A (HITACHI CHEM. CO. LTD.), 21 December 1989,

## Description

### FIELD OF THE INVENTION

This invention relates to flexible graphite sheet which includes a phosphorous-containing heat expandable component to enhance oxidation resistance and corrosion resistance in fire retardant and high sealability gaskets made from such sheet.

### BACKGROUND OF THE INVENTION

Flexible graphite is commercially used in sheet form for the manufacture of gaskets. The flexible graphite sheet can be in the form of compressed exfoliated, expanded particles of natural graphite, or, in the form of a compressed mixture of exfoliated, expanded particles of natural graphite and unexfoliated, intercalated. unexpanded, expandable particles of graphite. This latter embodiment has the advantage of undergoing expansion while in place as a gasket upon exposure to high temperature so that sealing is enhanced. Material of this type has also been proposed for use as a fire retardant covering for walls and other flammable substitutes since expansion of the intercalated expandable graphite upon exposure to flame acts as a fire retardant (see EP-A-527046 not disclosing particle sizes of the starting material).. For commercial reasons it has become advantageous to use increasingly smaller sized natural graphite particles, i.e. small sized flake as the starting material in making such sheet material. With the use of such finer material the expansion and fire retardation effect of the sheet has become uneven largely on account of the tendency of the exfoliated expanded particles and the unexpanded intercalated particles to segregate and result in a non-homogeneous product with irregular sealing and fire-retardant behavior. This problem is avoided in flexible graphite sheet material by the use of differently sized batches of natural graphite flake as starting materials for the respective exfoliated and expandable components of the flexible graphite sheet to be used in the manufacture of gaskets or fire retardant substrate coverings. It is also important to improve the oxidation resistance and corrosion resistant properties of flexible graphite sheet when used in gasket applications such as automotive exhaust systems.

### BRIEF DESCRIPTION OF THE DRAWINGS

FIG. 1 is a scanning view electron microscope (SEM) at an original magnification of 100X showing natural graphite flake sized in the range of 0.3 x 0.85 mm (20 x 50 mesh);
FIG. 2 is a scanning electron microscope (SEM) view at an original magnification of 100X showing natural graphite flake size 0.18 x 0.3 mm (50 x 80 mesh);
FIG. 3 and FIG. 6 are scanning electron microscope (SEM) views at an original magnification of 35X showing a flexible graphite sheet in accordance with the present invention;
FIGS. 4 and 5 are scanning electron microscope (SEM) views at an original magnification of 35X showing prior art flexible graphite sheet;

### DETAILED DESCRIPTION OF THE INVENTION

Naturally occurring graphite is a crystalline form of carbon comprising atoms bonded in flat layered planes with weaker bonds between the planes. By treating particles of natural graphite with an intercalant of e.g., a solution of sulfuric and nitric acid, the crystal structure of the graphite reacts to form a compound of graphite and the intercalant. Grinding, milling and other mechanical treatment of naturally occurring graphite can change the crystal orientation of graphite and the effectiveness of the intercalant. The treated intercalated particles of graphite are known as particles of "heat expandable graphite" and are commercially available. Upon exposure to high temperature, the particles of intercalated graphite undergo intumescence and expand in dimension as much as 80 or more times its original volume in an accordion-like fashion in the c-direction, i.e. in the direction perpendicular to the crystalline planes of the graphite. The exfoliated, i.e. expanded graphite particles are vermiform in appearance, and are therefore commonly referred to as worms.

A common method for making expandable graphite particles is described by Shane et al in U.S. Patent No. 3,404,061.

In the typical practice of this method, natural graphite flakes are intercalated by dispersing the flakes in a solution containing an oxidizing agent e.g., a mixture of nitric and sulfuric acid. The intercalation solution contains oxidizing and other intercalating agents known in the art. Examples include those containing oxidizing agents and oxidizing mixtures, such as solutions containing nitric acid, potassium chlorate, chromic acid, potassium permanganate, potassium chromate, potassium dichromate, perchloric acid, and the like, or mixtures, such as for example, concentrated nitric acid and chlorate, chromic acid and phosphoric acid, sulfuric acid and nitric acid, or mixtures of a strong organic acid, e.g. trifluoroacetic acid, and a strong oxidizing agent soluble in the organic acid.

A preferred intercalating agent is a solution of a mixture of sulfuric acid, or sulfuric acid and phosphoric acid, and an oxidizing agent, i.e. nitric acid, perchloric acid, chromic acid, potassium permanganate, hydrogen peroxide, iodic or periodic acids, or the like. Although less preferred, the intercalation solutions may contain metal halides such as ferric chloride, and ferric chloride mixed with sulfuric acid, or a halide, such as bromine as a solution of bromine and sulfuric acid or bromine in an organic solvent.

After the flakes are intercalated excess solution is drained from the flakes and after washing with water, the intercalated graphite flakes are dried and are expandable upon exposure to a flame for only a few seconds. Commercially available expandable graphite flake product is available from UCAR Carbon Company Inc.

The thus treated particles of graphite are hereafter referred to as "particles of intercalated graphite". Upon exposure to high temperature, the particles of intercalated graphite expand in dimension as much as 80 to 1000 or more times its original volume in an accordion-like fashion in the c-direction, i.e. in the direction perpendicular to the crystalline planes of the graphite. The exfoliated graphite particles are vermiform in appearance, and are therefore commonly referred to as worms. The worms may be compressed together into flexible sheets which, unlike the original graphite flakes, can be formed and cut into various shapes.

It is known to use a compressed sheet of combined exfoliated flexible graphite particles and unexfoliated, intercalated graphite particles in a gasket shape in a contacting gasket relationship and for use as a fire proof floor or wall covering. When used as a gasket, the gasket will expand upon contact with high temperature and also provide a gas tight fire proof seal. When used as a fire retardant wall covering the expansion of the intercalated graphite component on exposure to flame acts to extinguish the flame.

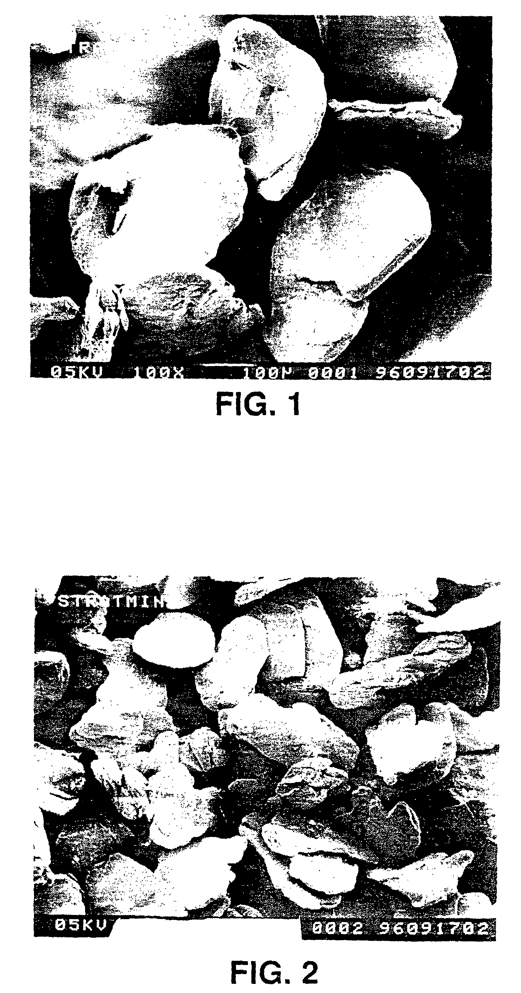

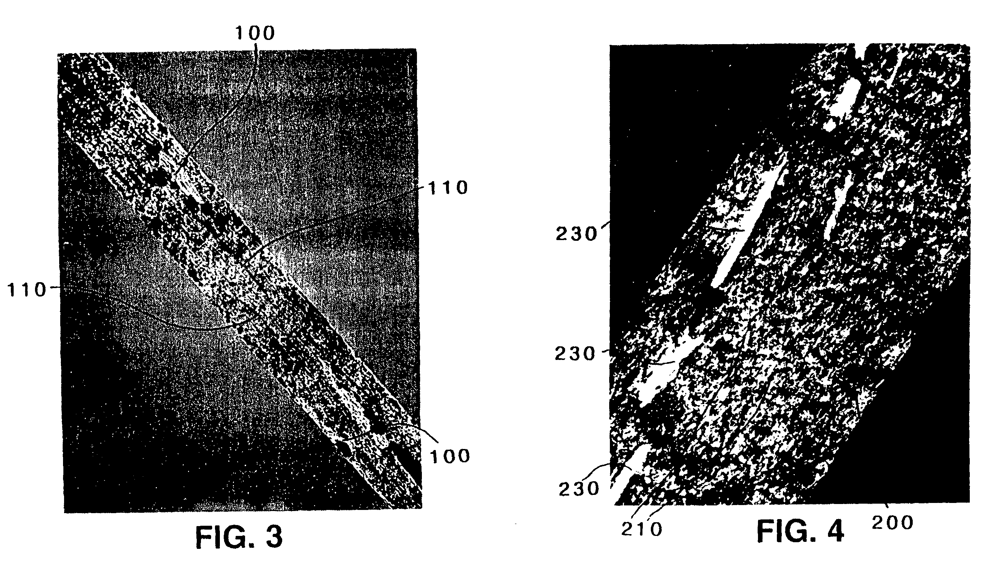

In a particular embodiment of the present invention, a first batch of relatively fine natural graphite flake particles, i.e. naturally occurring graphite flake, as shown in FIG. 1 (original magnification 100X), at least 80% by weight sized 0.3 x 0.85 mm (20 x 50 mesh) (through 20 mesh on 50 mesh), are treated by dispersing the naturally occurring flakes in an intercalating solution such as above-described. After the flakes of the first batch are intercalated, excess solution is drained from the flakes which are then washed with water and dried. The dried flakes of the first batch are exposed to a flame for only a few seconds and the intercalated flake particles expand, i.e. exfoliate, into vermicular, worm-like particles which are about 80 to 1000 times the volume of the initial dried intercalated flakes. A second batch of smaller sized natural graphite flakes as shown in FIG. 2 (original magnification 100X), sized at least 80% by weight 0.18 x 0.3 mm (50 by 80 mesh)(through 50 mesh on 80 mesh), is treated with an intercalating solution in the same manner as the first batch and similarly water-washed and dried. Phosphorous is added to the intercalated unexfoliated natural graphite flakes of the second batch by admixing a phosphorous compound such as monoammonium phosphate in the form of a solid or solution. The phosphorous additive can be phosphoric acid (hypo-meta-ortho-pyro) acid salts for example ammonium, alumesisium, alkaline metal, and alkaline earth metal salts and can be added in solid, or as a solution, to the intercalated graphite prior to drying. The amount of phosphorous added, as phoshorous, is from 0.2 to 0.6 percent by weight (2000 to 6000 ppm) of the unexfoliated intercalated natural graphite flakes of the second batch. These unexfoliated intercalated natural graphite flakes, at least 80% by weight 0.18 x 0.3 mm (50 by 80 mesh), with added phosphorous, are mixed and blended with the exfoliated particles of the first batch to provide from about 5% to 25% by weight of unexfoliated intercalated natural graphite flake in the mixture. The unexfoliated intercalated natural graphite flake particles of the second batch are readily mixed with the high volume, exfoliated, vermicular particles to provide a substantially uniform blend of phosphorous bearing unexfoliated, unexpanded flake and exfoliated, expanded vermicular particles. This can be achieved, for example, by spreading the finer, unexfoliated natural graphite particles of the second batch over a bed of exfoliated natural graphite particles from the first batch which are positioned on a vibrating table. The phosphorous-bearing intercalated, unexfoliated particles of natural graphite are of a size which are substantially uniformly entrapped and surrounded in a contiguous matrix of exfoliated natural graphite particles which when roll-pressed, results in a flexible graphite sheet in which the intercalated, unexfoliated natural graphite particles 100 are substantially uniformly "locked" by compression in a matrix 110 of compressed exfoliated natural graphite as shown in FIG. 3.

The use of finer than 0.18 mm (80 mesh) sized unexfoliated intercalated natural graphite flake has been found to result in a concentration of such particles near the surface of the bed of large exfoliated graphite particles. The finer particles are thus not uniformly entrapped in the mass of larger exfoliated particles resulting in a non-uniform final product material. The use of finer than a 0.18 mm (80 mesh) sized unexfoliated, intercalated graphite flakes also has been found to result in a flake with excess retained water content which results in a sheet which loses expansion capability and thus has a limited shelf life.

Larger sized, e.g. 0.3 x 0.59 mm (30 x 50 mesh) intercalated, unexfoliated natural graphite particles tend to agglomerate and result in non-uniformity in the mixture and the formation of disruptive channels during expansion when in use as a gasket or fire retardant covering. The use of a phosphorous addition to the unexfoliated, intercalated natural graphite particles of the second batch leads to increased resistance to oxidation and corrosion of the flexible graphite sheet when used in automotive gasket applications and the like.

### EXAMPLE I (PRIOR ART)

Natural graphite flake, sized 80% by weight 0.3 x 0.85 mm (20 x 50 mesh), (FIG. 1) was treated in a mixture of sulfuric (90 wt. %) and nitric acid (10 wt. %). The thus treated intercalated natural occurring flake was water washed and dried to about 1% by weight water. A portion of the treated, intercalated heat expandable natural graphite flake was introduced into a furnace at 2500°F to obtain rapid expansion of the flake into one pound of vermicular, worm shaped particles having a volume of about 325 times that of the unexpanded intercalated flake. Treated, unexpanded intercalated natural graphite flake, in the amount of 0.082 kg (0.18 pounds), was blended with the worm shaped, heat expanded graphite particles to provide a blended mixture containing about 15% by weight of unexpanded, intercalated natural graphite flake sized 0.3 × 0.85 mm (20 by 50 mesh).

The blended mixture of worm shaped heat expanded, intercalated graphite flake with unexpanded graphite flake was rolled into a sheet about 0.060 inch thick and 12 inches in width. Samples of the sheet 0.060 inch thick shown in cross-section at 35 x original magnification in FIG. 4 show the voids 200 and cracks 210 caused by relatively large flakes and the non-uniform distribution of the expandable, intercalated flakes 230.

Large 8.5 x 11 inch sheets of Example 1 were heated in an oven to 250°, 300° and 400°C. The variation in thickness and density across a cross-section of the sheets is given in the Table below:

| Heating Temp. (°C) | Variation in Expansion (%) | Variation in |
|---|---|---|
| Density (#/Ft.²) | | |
| 250° | 0-100 | 70-35 |
| 300° | 100-500 | 35-4 |
| 400° | 100-800 | 35-3 |

Samples of the sheet were cut to 1/2 ID x 1 3/4" OD by .060" thickness and heated in a oven set at the same temperatures.

The results of these tests showed that at 400°C the samples are much more expanded on the one side vs. the other, i.e. approximately 2 times as much variation in expansion.

### EXAMPLE II (comparative)

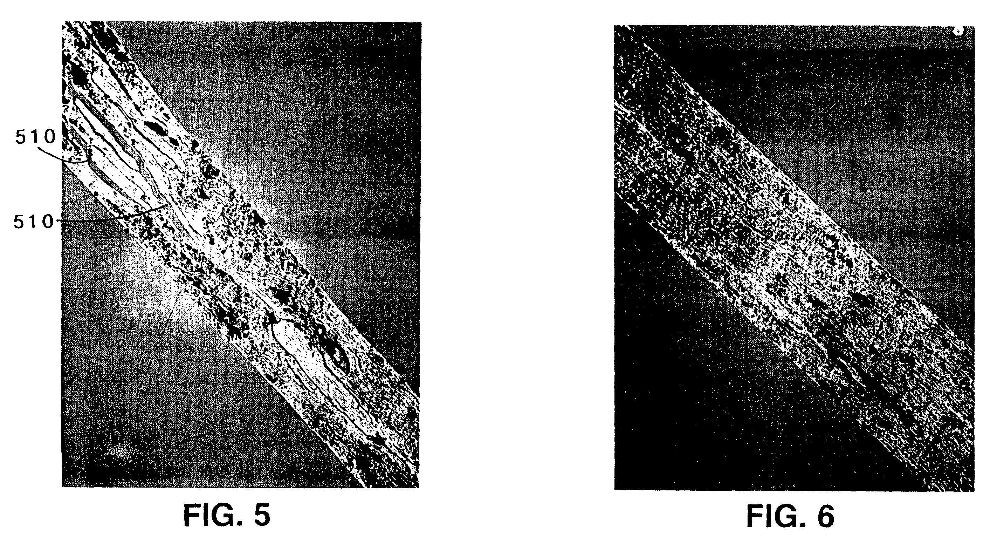

The procedure of Example I was followed except that the thickness of the bed was reduced and attempts were made to roll the material into sheet about 0.020" thick. This effort was not successful as shown in FIG. 5, due to the agglomeration and the concentration of material towards one side of the bed the material could not be calendered into a continuous sheet of uniform thickness as illustrated by voids 510.

### EXAMPLE III (comparative)

A first batch of natural graphite flake, sized 80% by weight 0.3 x 0.85 mm (20 x 50 mesh), (FIG. 1) was treated in a mixture of sulfuric (90 wt. %) and nitric acid (10 wt. %). The thus treated, intercalated natural graphite flake was water washed and dried to about 1% by weight water, a portion of the intercalated heat expandable natural graphite flake was introduced into a furnace at 2500°C to obtain rapid expansion of the flake into one pound of vermicular, worm shaped particles having a volume of about 325 times that of the unexpanded intercalated flake.

A second batch of smaller sized natural graphite flake, sized 80% by weight 0.18 x 0.3 mm (50 x 80 mesh)(FIG. 2) was treated in a mixture of sulfuric and nitric acid and water washed in the same manner as the first batch of larger sized natural graphite to obtain intercalated, unexpanded heat expandable natural graphite flake.

A portion, consisting of 0.082 kg (0.18 pounds) of the intercalated, unexpanded, heat expandable natural graphite flake of the smaller particle sized second batch material was blended with 0.454 kg (one (1) pound) of the worm shaped heat expanded particles of the first batch to provide a blended mixture containing about 15% by weight of unexpanded. intercalated natural graphite flake.

The mixture of worm shaped heat expanded natural graphite particles and unexpanded, intercalated natural graphite flake was rolled into a sheet about 1.27 mm (.050 inch) thick and 609.6 mm (24 inches) in width.

Samples (8.5 inch x 11 inch) of the sheet from this Example III were tested for expansion at 250°, 300° and 400°C; the reduced variation, as compared to Example I, in expansion and density are shown in the following Table:

| Heating Temp. (°C) | Variation in Expansion (%) | Variation in |
|---|---|---|
| Density (#/Ft.²) | | |
| 250° | 75-125 | 40-30 |
| 300° | 400-600 | 14-10 |
| 400° | 650-900 | 9-7 |

### EXAMPLE IV (comparative)

The material of Example III was used to roll the mixture of flakes into sheets about 0.015 inch and 0.020 inch thick, respectively. Both attempts were successful, resulting in satisfactory continuous sheet. A sample of the 0.015 inch thickness sheet is shown in cross-section, at 35 x original magnification, in FIG. 6. The sheet of FIG. 7 is of uniform density and thickness and contains no unacceptable voids or fissures.

### EXAMPLE V (comparative)

A test apparatus was used to measure the ability of various graphite sheets to seal a fixture and thus resist nitrogen flow. Three channels, each containing the identical shape and weight of material of exfoliated sheet and samples of Example 1 and Example 3 were heated to 400°C. After heating, the resistance to nitrogen flow of each of the sheets was measured at the same conditions of temperature and pressure. The results are shown below:

| Type of Material | Relative Resistance to Flow |
|---|---|
| 100% Exfoliated Graphite Sheet | 0.0002 |
| Example 1 (Prior Art) | 0.0007 |
| Example 3 (comparative) | 10.000 |

### EXAMPLE VI (HYPOTHETICAL) - THIS INVENTION

The procedure of Example III was followed except that monoammonium phosphate is added to the unexpanded, intercalated natural graphite particles, in the amount of 2% by weight, (0.5% phosphorous) prior to blending with the expanded graphite particles of the first batch.

Samples cut from the sheet of Example VI containing about 750 ppm by weight of the added phosphorous and are tested for resistance to oxidation by heating in air at 670°C for one hour. The samples exhibit less than 20% of the weight loss of a sample which does not contain phosphorous. Samples cut from the sheet of Example VI are also tested by being pressed against stainless steel sheet for seven days while submerged in deionized water. The amount of surface area of the stainless steel exhibiting signs of corrosion was about 10-20% that of a sample which does not contain any phosphorous.

* Mesh sizes used herein are United States screen series.

## Claims

1. Method for making flexible graphite sheet comprising:
(i) providing a first batch of natural graphite flake sized at least 80% by weight 0.3 x 0.85 mm (20 x 50 mesh);
(ii) treating said first batch of natural graphite flake with an intercalating solution to obtain heat expandable, intercalated graphite flake;
(iii) exposing intercalated natural graphite flake of step (ii) to an elevated temperature to exfoliate said intercalated natural graphite flake into expanded vermicular worm shaped particles of graphite;
(iv) providing a second batch of natural graphite flake sized at least 80% by weight 0.18 x 0.3 mm (50 x 80 mesh);
(v) treating said second batch of natural graphite flake with an intercalating solution to obtain unexpanded heat expandable intercalated graphite flakes sized 0.18 x 0.3 mm (50 x 80 mesh);
(vi) admixing a phosphorous bearing compound with the intercalated unexpanded graphite flakes of step (v) in the amount of 0.2 to 0.6 percent by weight of phosphorous.
(vii) mixing expanded vermicular worm shaped particles of natural graphite from step (iii) with, unexpanded heat expandable intercalated natural graphite flake with admixed phosphorous bearing compound from step (vi) to provide a blended mixture comprising from about 5 to 25% by weight of said unexpanded, heat expandable intercalated natural graphite flake; and
(viii) passing the blended mixture of step (vi) through pressure rolls to form a compressed sheet formed of said blended mixture.

2. A flexible roll-pressed sheet of a blended mixture of exfoliated expanded natural graphite formed by the heat expansion of intercalated natural graphite flake sized at least 80% by weight 0.3 x 0.85 mm (20 by 50 mesh) and unexfoliated intercalated natural graphite flake sized at least 80% by weight 0.18 x 0.3 mm (50 x 80 mesh), the amount of the unexfoliated intercalated natural graphite in the blended mixture and the flexible sheet being from 5 to 25% by weight and containing from 500 to 4000 ppm of phosphorous.

## Patentansprüche

1. Verfahren zur Herstellung von flexibler Graphitfolie, das umfasst:
(i) Bereitstellen einer ersten Charge von natürlichen Graphitflocken mit einer Größe von mindestens 80 Gewichtsprozent 0,3 x 0,85 mm (Gitter von 20 x 50);
(ii) Behandeln der ersten Charge von natürlichen Graphitflocken mit einer Interkalationslösung, um wärmedehnbare interkalierte Graphitflocken zu erhalten;
(iii) Einwirken einer erhöhten Temperatur auf die interkalierten natürlichen Graphitflocken aus Schritt (ii), um die interkalierten natürlichen Graphitflocken zu expandierten vermikularen wurmförmigen Graphitpartikeln zu blähen;
(iv) Bereitstellen einer zweiten Charge von natürlichen Graphitflocken mit einer Größe von mindestens 80 Gewichtsprozent 0,18 x 0,3 mm (Gitter von 50 x 80);
(v) Behandeln der zweiten Charge von natürlichen Graphitflocken mit einer Interkalationslösung, um nicht-expandierte wärmedehnbare interkalierte Graphitflocken mit einer Größe von 0,18 x 0,3 mm (Gitter von 50 x 80) zu erhalten;
(vi) Hinzumengen einer phosphorhaltigen Verbindung zu den interkalierten nicht-expandierten Graphitflocken aus Schritt (v) in einer Menge von 0,2 bis 0,6 Gewichtsprozent von Phosphor;
(vii) Mischen von expandierten vermikularen wurmförmigen Partikeln aus natürlichem Graphit aus Schritt (iii) mit nicht-expandierten wärmedehnbaren interkalierten natürlichen Graphitflocken mit beigemengter phosphorhaltiger Verbindung aus Schritt (vi), um ein gemischtes Gemenge bereitzustellen, das etwa 5 bis 25 Gewichtsprozent der nicht-expandierten wärmedehnbaren interkalierten natürlichen Graphitflocken enthält, und
(viii) Walzen des gemischten Gemenges aus Schritt (vi) mit Druckwalzen, um eine komprimierte Folie zu bilden, die aus dem gemischten Gemenge gebildet ist.

2. Flexible gewalzte Folie eines gemischten Gemenges von geblähtem expandiertem natürlichem Graphit, das durch Wärmedehnung von interkalierten natürlichen Graphitflocken mit einer Größe von mindestens 80 Gewichtsprozent 0,3 x 0,85 mm (Gitter von 20 x 50) und nicht-geblähten interkalierten natürlichen Graphitflocken mit einer Größe von mindestens 80 Gewichtsprozent 0,18 x 0,3 mm (Gitter von 50 x 80) gebildet ist, wobei die Menge des nichtgeblähten interkalierten natürlichen Graphits in dem gemischten Gemenge und der flexiblen Folie etwa 5 bis 25 Gewichtsprozent beträgt und 500 bis 4000 ppm Phosphor enthält.

## Revendications

1. Procédé pour fabriquer une feuille souple en graphite, comprenant :
(i) fournir un premier lot de flocons de graphite naturel dimensionnés de 0,3 x 0,85 mm (20 x 50 mesh) à au moins 80% en poids;
(ii) traiter ledit premier lot de flocons de graphite naturel avec une solution intercalaire afin d'obtenir des flocons de graphite naturel intercalés, dilatables à la chaleur;
(iii) exposer les flocons de graphite naturel intercalés de l'étape (ii) à une température élevée pour écailler lesdits flocons de graphite naturel intercalés en des particules dilatées de graphite en forme de vers vermiculaires;
(iv) fournir un deuxième lot de flocons de graphite naturel dimensionnés de 0,18 x 0,3 mm (50 x 80 mesh) à au moins 80% en poids;
(v) traiter ledit deuxième lot de flocons de graphite naturel avec une solution intercalaire afin d'obtenir des flocons de graphite naturel intercalés, dilatables à la chaleur, non dilatés, dimensionnés de 0,18 x 0,3 mm (50 x 80 mesh);
(vi) ajouter et mélanger un composé porteur de phosphore avec les flocons de graphite non dilatés, intercalés, de l'étape (v) selon la quantité de 0,2 à 0,6 pour cent en poids de phosphore.
(vii) mélanger les particules dilatées en forme de vers vermiculaires de graphite naturel de l'étape (iii) avec des flocons de graphite naturel intercalés, dilatables à la chaleur, non dilatés, avec le composé porteur de phosphore ajouté et mélangé de l'étape (vi) pour donner un mélange mélangé comprenant environ de 5 à 25% en poids desdits flocons de graphite naturel intercalés, dilatables à la chaleur, non dilatés; et
(viii) passer le mélange mélangé de l'étape (vi) à travers des rouleaux de pression pour former une feuille comprimée dudit mélange mélangé.

2. Feuille souple comprimée par rouleaux, d'un mélange mélangé de graphite naturel dilaté, écaillé, formée par la dilatation thermique de flocons de graphite naturel intercalés dimensionnés de 0,3 x 0,85 mm (20 par 50 mesh) à au moins 80% en poids, et de flocons de graphite naturel intercalés, non écaillés, dimensionnés de 0,18 x 0,3 mm (50 x 80 mesh) à au moins 80% en poids, la quantité de graphite naturel intercalé non écaillé dans le mélange mélangé et la feuille souple étant de 5 à 25% en poids et contenant de 500 à 4000 ppm de phosphore.
